# EUROPEAN PATENT APPLICATION

(11) **EP 1 293 244 A1**
(43) Date of publication of application: **19.03.2003**
(21) Application number: 01941038.0
(22) Date of filing: 13.06.2001
(51) Int. Cl.: B01D 61/18, B01D 63/08, B01D 63/14

(54) **FILTER CARTRIDGE FOR MICROFILTRATION AND METHOD FOR MANUFACTURE THEREOF**

(30) Priority: 14.06.2000 JP 2000178442
(71) Applicant: FUJI PHOTO FILM CO., LTD., Kanagawa-ken, 250-0123 (JP)
(72) Inventor: OHTANI, Sumio, Minami-Ashigara-shi, Kanagawa 250-0123 (JP)
(74) Representative: Grünecker, Kinkeldey, Stockmair & Schwanhäusser Anwaltssozietät
(86) International application number: JP0105030
(87) International publication number: WO01096001

(57) **Abstract**

A microfiltration filter cartridge which is excellent in a chemical resistance and a filtration stability and does not generate a toxic gas in a burning and discarding process and a method of manufacturing the microfiltration filter cartridge. The microfiltration filter cartridge comprises a micro-porous filtration membrane, supports, a core, an outer cover and end plates, all the components being formed of a polysulfone based polymer, wherein melting molding members in the component is subjected to annealing. Also in the use for the high temperature filtration of isopropanol in a semiconductor manufacturing process or the like, a crack is not generated on the component but a completeness thereof can be maintained suitably.

## Description

### Technical Field

The present invention relates to a filter cartridge using a micro-porous filtration membrane and a method of manufacturing the filter cartridge. More specifically, the invention relates to a filter cartridge which is excellent in a chemical resistance and a filtration stability and does not generate a toxic gas in a burning and discarding process and a method of manufacturing the filter cartridge.

### Background Art

In the manufacture of a semiconductor, recently, there has been required a filter for filtration which has a high resistance to chemicals such as an organic solvent, acid, alkali and an oxidizing agent and generates a smaller amount of eluted matters. Currently, a micro-porous microfiltration membrane formed of polytetrafluoroethylene (PTFE) is used for the filtration of the chemicals and a filter cartridge using a fluorine based polymer, that is, a so-called all fluorine filter cartridge is used for other filter cartridge components. In the all fluorine filter cartridge, however, there is a problem in that a filtration membrane formed of PTFE has a very great hydrophobicity and air lock is caused to generate filtration impossibilities due to the contamination of a small amount of bubbles even if wetting is carried out with alcohol such as isopropanol at the beginning of the filtration. Moreover, there is also a problem in that the used filter cartridge generates a toxic gas when it is to be burned and discarded.

The drawbacks of the conventional all fluorine filter cartridges can be eliminated by forming, of a polysulfone based polymer, all components constituting the filter cartridge such as a micro-porous filtration membrane, supports, a core, an outer cover and end plates. The micro-porous filtration membrane formed of the polysulfone based polymer is hydrophilic and does not cause the air lock due to the contamination of a small amount of bubbles, and is excellent in a filtration stability. Moreover, a filter cartridge having all the components formed of the polysulfone based polymer does not generate a toxic gas even if it is burned and discarded. As a matter of course, the polysulfone based polymer is a material which is excellent in a chemical resistance and the filter cartridge having all the components formed of the polysulfone based polymer is excellent in the chemical resistance.

In the filter cartridge having all the components formed of the polysulfone based polymer, however, there are still the following problems. More specifically, it is required that a filter cartridge to be used for manufacturing a semiconductor is resistant to the high temperature filtration of 60°C to 80°C for chemicals such as isopropanol to be often used in a semiconductor manufacturing process, a mixture of hydrochloric acid and aqueous hydrogen peroxide which is referred to as aqueous hydrochloric peroxide or a mixed solution of ammonia and hydrogen peroxide which is referred to as aqueous ammonia peroxide. However, the filter cartridge formed of the polysulfone based polymer has a problem in that a very small crack is generated on end plates fabricated by heat melting molding such as injection molding or the like when it is used for the high temperature filtration of isopropanol, resulting in the damage of the completeness of the filter.

In consideration of the conventional circumstances, it is an object of the invention to provide a microfiltration filter cartridge having an excellent filtration stability and an excellent chemical resistance which does not generate a toxic gas in a burning and discarding process, and furthermore, which can prevent a crack from being generated on components to damage a completeness even if the filter cartridge is used for the high temperature filtration of isopropanol, and a method of manufacturing the filter cartridge.

### Disclosure of the Invention

In order to achieve the object, the inventors have vigorously made investigations. As a result, they have made the invention by employing the following structure.

More specifically, the invention is as follows.
(1) A microfiltration filter cartridge comprising a micro-porous filtration membrane, supports, a core, an outer cover and end plates, all the components being formed of a polysulfone based polymer, wherein melting molding members in the component is subjected to annealing.
(2) The microfiltration filter cartridge according to the above-mentioned (1), wherein the melting molding members subjected to the annealing is end plates.
(3) The microfiltration filter cartridge according to the above-mentioned (1) or (2), wherein all of the micro-porous filtration membrane, the supports, the core, the outer cover and the end plates which are the components are formed of polyethersulfone.
(4) The microfiltration filter cartridge according to any of the above-mentioned (1) to (3), wherein a dimension in an axial direction of a window of each of the outer cover and the core is 1 mm to 3 mm.
(5) The microfiltration filter cartridge according to any of the above-mentioned (1) to (4), wherein a primary side and/or secondary side supports/support are/is formed by a micro-porous film provided with a large number of very fine concave portions and/or convex portions.
(6) The microfiltration filter cartridge according to any of the above-mentioned (1) to (5), wherein the micro-porous filtration membrane has a water bubble point of 0.3 MPa or more and the supports has a water bubble point of 0.15 MPa or less.
(7) A method of manufacturing a microfiltration filter cartridge comprising a micro-porous filtration membrane, supports, a core, an outer cover and end plates, all the components being formed of a polysulfone based polymer, wherein melting molding members in the component is subjected to annealing.
(8) The method of manufacturing a microfiltration filter cartridge according to the above-mentioned (7), wherein the melting molding members to be annealed is end plates.
(9) The method of manufacturing a microfiltration filter cartridge according to the above-mentioned (7) or (8), wherein all of the micro-porous filtration membrane, the supports, the core, the outer cover and the end plates which are the components are formed of polyethersulfone.
(10) The method of manufacturing a microfiltration filter cartridge according to any of the above-mentioned (7) to (9), wherein the cartridge is cleaned with a flow of warm ultrapure water at 50°C to 100°C after assembling and is then dried in a clean oven.
(11) A method of filtrating a wafer cleaning solution for a semiconductor integrated circuit, wherein the microfiltration filter cartridge according to any of the above-mentioned (1) to (6) is used to start to filtrate chemicals without prewetting through alcohol.

### Brief Description of the Drawings

Fig. 1 is an expanded view showing the structure of a general pleat type filter cartridge, and
Fig. 2 is a flow chart showing a cyclic filtration testing device used in a second example.

### Best Mode of Carrying Out the Invention

In general, known filter cartridges include a pleat type cartridge having such a structure that a micro-porous filtration membrane and supports for protecting the filtration membrane are folded like pleats, and a flat sheet lamination type cartridge in which a plurality of flat sheet type filtration units are provided. An example of the structure of the pleat type cartridge has been disclosed in Japanese Laid-Open Patent Publications Nos. Hei 4-235722 and Hei 10-66842 (US5,846,421) and the like. Moreover, an example of the structure of the flat sheet lamination type cartridge has been disclosed in Japanese Laid-Open Patent Publications Nos. Sho 63-80815, Sho 56-129016 and Sho 58-98111 and the like. In the invention, any of the filter cartridges can be employed. Moreover, a filter cartridge according to the invention can be manufactured by a conventional method of manufacturing a filter cartridge except for the annealing of melting molding members.

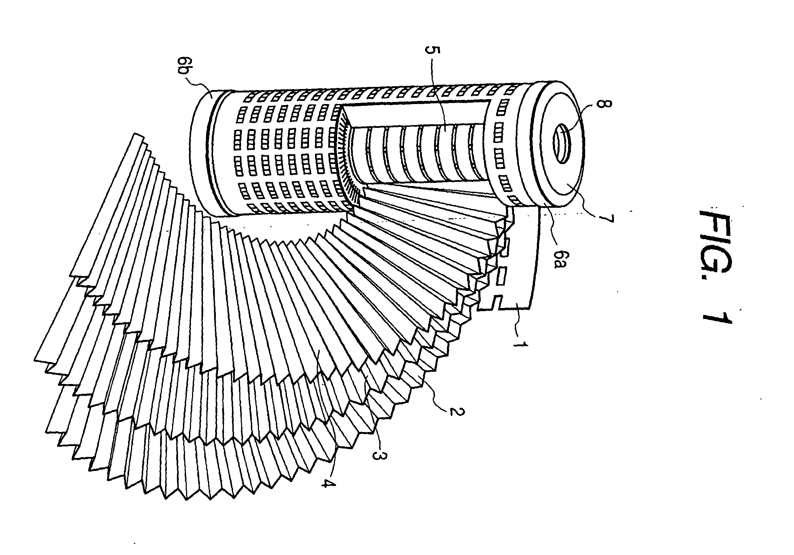

As an example, the structure of the pleat type cartridge will be described below in more detail with reference to Fig. 1. Fig. 1 is an expanded view showing the whole structure of a general pleat type microfiltration filter cartridge. In the filter cartridge, generally, a micro-porous filtration membrane 3 is sandwiched between two supports 2 and 4 and is pleated in this state and is wound upon a core 5 having a large number of liquid collecting ports. An outer cover 1 having a large number of liquid feeding ports is provided on the outside of the core 5 and protects the micro-porous filtration membrane 3. On both ends of a cylinder constituted by each element, the micro-porous filtration membrane 3 is sealed with end plates 6a and 6b. The end plates 6a comes in contact with the seal portion of a filter housing (not shown) through a gasket 7. The end plates 6a of a certain type comes in contact with the filter housing through an O ring provided in one end plate portion. The gasket or the O ring can be easily removed and attached during scrapping. A filtered liquid is collected through the liquid collecting port of the core 5 and is discharged from a liquid outlet 8 provided on the end of the cylinder through the hollow portion of the core 5. There are such a type that the liquid outlet is provided on both ends of the cylinder and such a type that the liquid outlet is provided on only one of ends and the other end is blocked.

In the invention, a hydrophilic micro-porous microfiltration membrane formed of a polysulfone based polymer such as aromatic polyallylethersulfone is used for the micro-porous filtration membrane 3. In the polysulfone based polymer, polyethersulfone is preferably used because it has a much wider range of a chemical resistance. Typical examples of the polysulfone based polymer include polymers expressed in the following general formulas (I), (II) and (III).

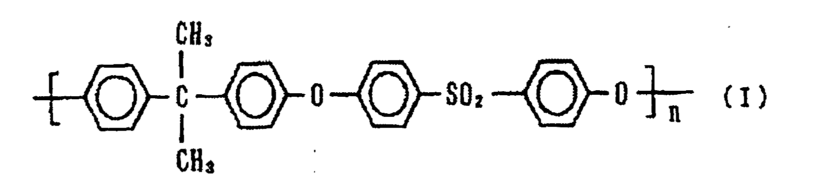

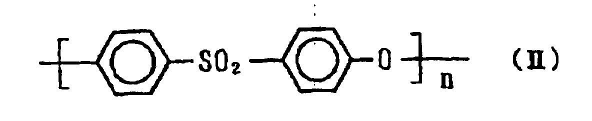

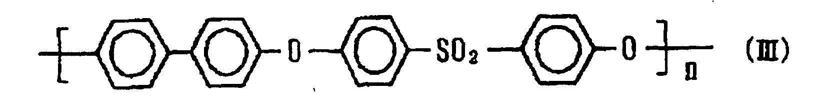

The polymer expressed in the general formula (I), which is so-called polysulfone, includes a polymer having a trade name of UDEL POLYSULFONE produced by AMOCO Co., Ltd. The polymer expressed in the general formula (II), which is so-called polyetersulfone, includes a polymer having a trade name of SUMIKA EXCEL PES produced by Sumitomo Chemical Company, Limited. Moreover, a method of manufacturing a hydrophilic micro-porous microfiltration membrane formed of a polysulfone based polymer is described in Japanese Laid-Open Patent Publications Nos. Sho 56-154051, Sho 56-86941, Sho 56-12640, Sho 62-27006 (US4,933,081), Sho 62-258707, Sho 63-14161 and the like.

The pore size of the micro-porous filtration membrane 3 is usually 0.02µm to 5µm and preferably 0.02 µm to 0.45µm for manufacturing a semiconductor, and an indicated pore size is preferably 0.02µm to 0.2µm for manufacturing a high integration IC. Such a film characteristic is indicated to be 0.3 MPa or more by a water bubble point value measured by an ASTM F316 method and to be 0.1 to 1 MPa by an ethanol bubble point. An ethanol bubble point of 0.3 to 0.7 MPa is particularly preferable. Moreover, a film having a higher rate of holes for an apparent volume is preferable because of a lower filtration resistance. On the other hand, if the number of holes is larger, a film strength is reduced so that the film easily breaks away. Accordingly, it is preferable that the filtration membrane should have a void fraction of 40% to 90%. It is particularly preferable that the void fraction should be 57% to 85%. Moreover, the thickness of the film is usually 30µm to 220µm. If the thickness is too great, the area of the film which can be incorporated in the cartridge is decreased. On the other hand, if the thickness is small, the film strength is reduced. Therefore, the thickness of the film is preferably 60µm to 160µm and more preferably 90µm to 140µm.

The micro-porous filtration membrane 3 is interposed between the supports 2 and 4 and is usually pleated by a well-known method. The supports 2 and 4 to be used are also formed of a polysulfone based polymer in the same manner as in the micro-porous filtration membrane 3. Polyethersulfone in the polysulfone based polymer is preferably used for the material of the supports. In the pleating, at least one micro-porous filtration membrane can also be used according to circumstances. At least one film support can also be used on either side according to circumstances. The supports serves to reinforce a filtration membrane for a fluctuation in a filtration pressure, and furthermore, to introduce a liquid to the inner part of a pleat. Accordingly, it is necessary to have a proper liquid transmission property and a physical strength which can sufficiently protect the filtration membrane. In the invention, supports formed variously which have such a function can be used and supports having the following configuration can be used.

In the invention, first of all, it is possible to use a nonwoven fabric or a woven fabric which is formed of a polysulfone based polymer for the supports. The nonwoven fabric or woven fabric preferably has a thickness of 50 µm to 600 µm measured by a screw micrometer and more preferably 80 µm to 350 µm, and preferably has a basis weight of 15 g/m² to 100 g/m² and more preferably 20 g/m² to 50 g/m². A strength becomes insufficient if the thickness is too small, and the area required for the filtration membrane which can be accommodated in the cartridge cannot be maintained if the thickness is too great.

In the invention, moreover, a method of manufacturing a micro-porous film formed of the polysulfone based polymer to be used for the supports is basically the same as the method of manufacturing a micro-porous microfiltration membrane. A micro-porous film to be used for the supports has a water bubble point of 0.15 MPa or less, preferably 0.02 to 0.15 MPa, and more preferably 0.04 to 0.15 MPa. A water permeability in a perpendicular direction to supports surface preferably has a stream amount of 150 ml/cm² or more per minute with the application of a differential pressure of 0.1 MPa and more preferably 200 ml/cm² or more. The Mullen bursting strength of the supports is preferably 80 kPa or more and more preferably 120 kPa or more.

It is preferable that the micro-porous film should be provided with a large number of very fine trenches and/or convex portions and should be thus used as the supports. A method of providing the trench and/or the convex portion on the micro-porous film is not particularly restricted. For example, it is possible to suitably provide a desired trench and/or convex portion on the micro-porous film by carrying out emboss calendaring for interposing a micro-porous film between a metal roll having a large number of projections formed on a surface and a backup roll having a flat surface and continuously crimping the micro-porous film. If a hard backup roll is used, only the trench is formed on the micro-porous film. If a soft backup roll is used, a projection is simultaneously formed on the opposite surface of the trench. In general, a hole is broken in the trench portion so that a water transmission property is eliminated. Therefore, it is preferable that a trench formation area should be equal to or smaller than a half of the whole micro-porous film to be the supports.

The trench and/or the convex portion which are/is to be provided on the micro-porous film may be provided on one of the sides of the micro-porous film or both sides thereof. A concavo-convex portion to be provided on the micro-porous film can have a depth of 5µm to 0.25 mm, preferably 20µm to 0.15 mm, and particularly preferably 50µm to 0.1 mm. The width of a trench and a crest (hereinafter referred to as a "trench") to be provided on the micro-porous film can be 5µm to 1 mm, preferably 20µm to 0.4 mm, and particularly preferably 50µm to 0.2 mm. The width and depth of the trench to be formed do not need to be constant in any portion. In the case in which the trench is to be formed, circular and polygonal shapes to be independent of each other are not preferable. Such a structure that the trenches communicate with each other to cause a liquid to flow in a planar direction is preferable. It is more preferable that a large number of longitudinal and transverse trenches crossing each other should be formed. A space between the trenches is preferably 4 mm or less in a wide portion, and more preferably 0.15 mm to 2 mm. Moreover, the thickness of the micro-porous film is preferably 60µm to 300µm, and particularly preferably 100µm to 220µm. The function of reinforcing the filtration membrane is deteriorated if the thickness is too small, and the area of the film which can be incorporated in the cartridge is reduced if the thickness is too great.

In the invention, moreover, it is also possible to use supports in which a hole is provided on a nonporous-film formed of the polysulfone based polymer and a concavo-convex portion is provided on the surface and back of the film by emboss calendaring method, for example. A method of forming a hole on the film is not particularly restricted. For example, there are a punching method, a method of sticking a sharp needle, a laser burning method and a water jet punching method. The size of the hole can be equivalent to a circle, an ellipse or a rectangle having a diameter or a side of 10µm to 5 mm. The size of the hole is preferably 30 µm to 1.5 mm and particularly preferably 60µm to 0.5 mm. The rate of the hole area in the film area can range from 10% to 90%. If the hole area rate is too low, a filtration resistance is too increased. On the other hand, if the hole area rate is too high, a mechanical strength is reduced so that the micro-porous filtration membrane cannot be reinforced. In the case in which a large hole is to be formed, a high hole area rate is required. In the case in which a small hole is to be formed, a comparatively low hole area rate is enough.

The depth or height of the concavo-convex portion to be provided on the film can be 5µm to 1 mm. The depth or height is preferably 20µm to 0.4 mm and particularly preferably 50µm to 0.2 mm. The height and depth of the concavo-convex portion to be formed do not need to be constant in any portion. It is not preferable that a concave portion to be formed on the film should have circular and polygonal shapes or other shapes which are independent of each other. It is necessary to have such a structure that the concave portions can communicate with each other to cause a liquid to flow in the formed trench in a planar direction. It is more preferable that a large number of longitudinal and transverse trenches crossing each other should be formed. The width of the trench is preferably 5µm to 1000µm, more preferably 20 µm to 400µm, and particularly preferably 50µm to 200 µm. It is preferable that a space between the trenches should be 4 mm or less in a large portion. It is more preferable that the space should be 0.15 mm to 2 mm. It is ideal that the trench communicates with all the holes thus formed. The patterns of the convex portion formed on the opposite surface of the trench with the formation of the trench may originally communicate with each other or be isolated from each other. However, in the case in which the embossing is carried out, the convex and concave portions become a surface and a back respectively. Accordingly, the isolated convex portion seen from one plane forms a discontinuous isolated concave portion seen from an opposite plane, which is not preferable for the pattern of the concavo-convex portions to be provided. The thickness of a film to be used for the supports is preferably 25µm to 125µm and particularly preferably 50 µm to 100 µm. The function of reinforcing a filtration membrane is deteriorated if the thickness is too small, and pleating is hard to perform if the thickness is too great.

In the invention, furthermore, it is also possible to use a net formed of the polysulfone based polymer as the supports. The net can be fabricated by spinning the polysulfone based polymer into a monofilament having a diameter of 50µm to 300µm and knitting the monofilament. Since the monofilament to be used for the net is thicker and stronger than a yarn for a nonwoven fabric, it can be spun comparatively easily. If the size of the yarn is smaller, a finished net is thinner and can be pleated more easily. On the other hand, the size of the yarn is smaller, spinning is harder to perform and the strength of the finished net is also reduced. Accordingly, it is preferable that the diameter of the filament should be 100µm to 200µm.

The uneven portions of both ends of a filter element constituted by a micro-porous filtration membrane and supports which is pleated as described above are cut down by means of a cutter knife or the like to make the both ends uniform, and the filter element is generally rounded like a cylinder and the pleats of a seam are sealed in fluid-tightness by using a heat seal or an adhesive. The bonding seal may be carried out by joining six layers in total, that is, the micro-porous filtration membrane 3 and the supports 2 and 4 or the bonding seal may be carried out such that the filtration membranes are directly superposed excluding the supports 2 and 4. The heat seal may be carried out with a thermoplastic sheet interposed between the seams of the pleats. The adhesive and thermoplastic sheet to be used should have a heat resistance and a chemical resistance. Accordingly, it is preferable that a polysulfone based polymer material should be used and it is particularly preferable that polyethersulfone should be used. In the case in which the adhesive is to be used, a polysulfone based polymer adhesive to be used is maintained to be dissolved in a solvent. For example, 10 parts of polyethersulfone is dissolved in a mixed solution containing 30 parts of methylene chloride and 20 parts of diethylene glycol, and 140 parts of diethylene glycol is gradually added and mixed thereto. The solvent is heated and vaporized after bonding so as not to remain in a filter cartridge.

The core 5 is inserted in the cylindrical filter element formed as described above and is covered with the outer cover 1 to fabricate a so-called pleat body. The outer cover 1 and the core 5 are provided with a large number of slit-shaped windows through which a liquid can be easily transmitted and which protects the pleats against a pressure in the direction of filtration or a reverse direction thereto. By setting the dimension of the slit-shaped window in the direction of a cylindrical shaft to 1 mm to 3 mm and preferably 1.5 mm to 2 mm, the protecting function of the outer cover against a fluctuation in a filtration pressure can be enhanced greatly. While the dimension of the window in a circumferential direction is not particularly restricted, a range of 10 mm to 50 mm is proper. In particular, when forming a large number of very fine trenches and/or convex portions, the pressure resistance of the filter cartridge can be improved rapidly. If the dimension in the direction of the cylindrical shaft of the window provided on the core is too small, the transmittance of a liquid is damaged. A space between respective windows of the outer cover and the core which is set to 2 mm to 20 mm in circumferential and axial directions is preferable because both a strength and a liquid transmittance can be satisfied. A space of 3 mm to 15 mm is more preferable.

An end seal step of bond sealing both ends of the pleat body with the end plates 6 in fluid-tightness can be carried out by a heat melting method, a solvent bonding method or the like. In the heat melting method, only the seal surface of end plates is caused to come in contact with a heat plate or irradiation is carried out through an infrared heater to heat and dissolve only a surface and one of the end faces of the pleat body is pushed against the dissolved surface of the end plates and is bonded and sealed through thermal welding. In the case of the solvent bonding method, it is important that the solvent is selected. Usually, there is selected a solvent which does not dissolve a filtration membrane or has a poor dissolving property for the filtration membrane and has a high dissolving property for the end plates. The solvent may be single chemical species or a mixed solvent. When two or more solvents are to be mixed, at least a solvent having a higher boiling point which does not have a dissolving property for the filtration membrane is selected. It is more preferable that approximately 1% to 7% of polymer should be dissolved in a solvent adhesive. The polymer to be dissolved is generally selected from the same materials as the material of the end plates or at least materials which can easily be bonded to the end plates.

In the invention, the core 5, the outer cover 1 and the end plates 6 which are formed of a polysulfone based polymer are used in the same manner as the micro-porous filtration membrane 3 and the supports 2 and 4. For the material of the component, polyethersulfone in the polysulfone based polymer is preferably used. It is particularly preferable that the materials of all the components' should be standardized by the polyethersulfone because the range of a chemical resistance can be increased and a bonding seal property can be enhanced.

The end plates 6 subjected to injection molding is preferably used. According to circumstances, the end plates 6 obtained by punching or cutting out an extrusion molded thick plate like a disc is used. The end plates thus formed easily generates a crack in contact with an organic solvent because of a residual strain caused during heat melting molding such as injection molding or extrusion molding. At the end seal step, a crack is generated in some cases in which welding seal is carried out by using a solvent adhesive, and a small crack is sometimes generated even if the heat melting seal is carried out. Furthermore, there is a greater problem in that a crack is generated on the end plates and a liquid leaks through the crack when isopropanol is to be filtrated at a high temperature of 60°C to 80°C, resulting in the damage of the completeness of a filter cartridge in some cases. The generation of the crack in the end plates can be prevented by previously annealing the end plates and removing a residual strain during the heat melting molding. When carrying out the invention, accordingly, the end plates is usually subjected to the annealing to remove the thermal residual strain before carrying out the bonding seal using the end plates at the end seal step. However, in the case in which the thermal residual strain of the end plates is comparatively small and the thermal melting seal is employed, the annealing is not carried out before the bonding seal and may be performed after the filter cartridge is completely assembled. If the annealing is not carried out at all, a crack is generated on the end plates when high temperature isopropanol filtration is to be carried out, and a liquid leaks through the crack to damage the completeness of the filter cartridge in some cases.

In the invention, it is preferable that the micro-porous filtration membrane, the supports, the core and the outer cover should also be subjected to the annealing. In that case, the annealing may be carried out before the bonding seal or after the assembly is completed in the same manner as in the case of the end plates.

Moreover, the polyether sulfone has a high hydrophilic property and a molding member easily absorbs moisture and is overheated and molten due to thermal welding so that water in a polymer is vaporized to form a foam. When a bubble is generated on the end plates when a film is to be molten and bonded, the completeness of the welding of the film and the end plates is damaged to cause a so-called particle leakage by the use for filtration. Accordingly, when the filter cartridge is to be formed of an polyethersulfone material, it is preferable that the annealing should be also used for dehumidifying and be carried out before the welding seal.

The annealing is carried out under the following conditions. More specifically, an annealing temperature is generally set to 140°C to 210°C. In the polysulfone expressed in the general formula (I), a temperature of 150°C to 170°C is preferable. A time required for a treatment is varied depending on the annealing temperature, and is two hours or more and preferably four hours or more. For example, when the annealing is to be carried out at 160°C, it is particularly preferable that five hours or more should be required for completeness. In the polyethersulfone expressed in the general formula (II), a temperature of 160°C to 200°C is preferable. A temperature of 170°C to 190°C is particularly preferable. A time required for a treatment is varied depending on the annealing temperature, and is two hours or more, preferably four hours or more. For example, when the annealing is to be carried out at 180°C, it is particularly preferable that five hours or more should be required for completeness. Referring to the components of the filter cartridge other than the end plates, similarly, it is apparent that the annealing is preferable if a thermal melting molding member is used for them.

In the invention, the "heat melting molding member" is such a member as to be obtained by heating and melting a polysulfone based polymer to be the material of a micro-porous filtration membrane, supports, a core, an outer cover and end plates which are the components of a filter cartridge and then implanting the polymer in a mold or extruding the polymer through a cap, thereby molding the polymer to have a desirable shape and cooling and solidifying the polymer.

The polysulfone based polymer to be the material of the filter cartridge according to the invention is excellent in a chemical resistance and is hydrophilic. Therefore, the filter cartridge according to the invention is excellent in a resistance to cleaning chemicals constituted, by various acids, alkali, an oxidizing agent and the like which are used at a wafer cleaning step for a semiconductor integrated circuit and can suitably filter the cleaning chemicals. For example, it is possible to suitably filter a mixed solution of hydrochloric acid and hydrogen peroxide which is to be used at the cleaning step, dilute hydrofluoric acid, a mixed solution of hydrofluoric acid and ammonium fluoride, a mixed solution of hydrofluoric acid and hydrogen peroxide, a mixed solution of ammonia and hydrogen peroxide or the like. Above all, a mixed solution of hydrofluoric acid having a high viscosity and ammonium fluoride can be filtered particularly suitably. Moreover, since the micro-porous filtration membrane of the filter cartridge according to the invention is formed of a polysulfone based polymer having a high hydrophilicity, cleaning chemicals can be started to be filtered without carrying out prewetting with alcohol and subsequently the ultrapure water cleaning of the alcohol and the cleaning chemical substitution of the ultrapure water and air lock is not caused by the contamination of slight bubbles so that an excellent filtering stability can be obtained. More specifically, according to the invention, an extra step such as prewetting can be eliminated and the generation of an unnecessary waste fluid can be avoided, thereby efficiently carrying out the filtering with the cleaning chemicals. Furthermore, the filter cartridge to be used for the invention does not generate a toxic gas for the burning and discarding process. In other words, it is apparent that the invention provides a filtering method to protect the environment in that the toxic gas is not generated in the process for burning and discarding the used filter cartridge and the unnecessary waste fluid is not generated.

In the filter cartridge thus obtained, a solvent to be used in a process for forming a hydrophilic microfiltration membrane or a micro-porous film for supports, a micro-porous forming additive and an impurity in a polysulfone based polymer remain in the film or stick thereto. When the impurities are eluted into a filtrate, particularly, into chemicals to be used at a semiconductor manufacturing step, the yield of a semiconductor thus obtained is reduced or performance is deteriorated. As a result of vigorous investigations, the inventors have found an organic pollutant cleaning method which is inexpensive, efficient and effective. The method will be described below in detail.

Each filter cartridge which is completely assembled is set into a filter housing to carry out cleaning while filtrating with a flow of ultrapure water. It is preferable that the liquid discharge port of the filter cartridge should be turned in an upward direction because cleaning water can be transmitted in an almost equal flow in any part of the upper and lower portions of the filter cartridge. In order to carry out the cleaning more efficiently, hot ultrapure water is used in the early stage of the flowing. A flow of 2 to 10 liters per minute is preferable for each 10-inch filter cartridge. Even if the water is caused to flow in an amount of 10 liters or more per minute, the same cleaning effect is obtained and the cost of the hot ultrapure water is increased, which is inefficient. The temperature of the hot water is 50°C or more and preferably 70°C or more, and the cleaning effect is greater if a water temperature is higher. However, if the water temperature exceeds 100°C, boiling is hard to control, which is not preferable. A temperature of 85°C to 100°C is the most effective and is comparatively easy to deal with. Usually, the hot water is caused to flow for 15 to 120 minutes and is switched to cold ultrapure water and the cold water is caused to flow for 3 to 10 minutes in an amount of 2 to 10 liters per minute, and the water flow is then completed. It is apparent that the time required for a treatment and the temperature of the ultrapure water to be used are varied depending on the extent of contamination of the filter cartridge. As the temperature of the ultrapure water is higher, a cleaning effect is greater and a time required for cleaning may be shorter. By measuring the cleaning effect, necessary and sufficient conditions are to be selected. The filter cartridge which has been completely cleaned is dried in a clean oven and is clean packed. The drying is carried out at a temperature of 100 °C or less. If the drying temperature is high, a carbon component which slightly remains in a member constituting a filtration membrane or a cartridge is diffused and easily appears on a surface. To the contrary, if the drying temperature is too low, a long time is taken for the drying, which is not preferable because the drying is inefficient and there is an opportunity to gather mold. A preferable drying temperature is 60°C to 85°C.

In some cases, dilute acid cleaning is carried out prior to the ultrapure water cleaning. The dilute acid cleaning is carried out by putting a plurality of filter cartridges into a basket, immersing the whole basket in a solution filled with dilute acid and giving a vibration to perform a treatment for approximately 20 minutes to approximately 10 hours at a maximum. The vibration may be given in any method in which the completeness of the filter cartridge is not damaged. There are a method of stirring a solution, a method of moving the basket in a vertical or horizontal direction, a method of giving an ultrasonic vibration, a method of once raising the basket from a liquid level and draining the liquid and then immersing the basket in the liquid again and the like. When great ultrasonic waves are given for 10 minutes or more, the completeness of the filter is damaged. Therefore, the intensity of the ultrasonic wave is to be determined after sufficient investigations.
Preferable acid to be used includes hydrogen halides such as hydrochloric acid or bromate, organic carboxylic acids such as acetic acid or oxalic acid, nitric acid and sulfuric acid. Hydrogen halides which rarely remain in the filter through ultrapure water cleaning and subsequent drying are preferable and, above all, general hydrochloric acid is particularly preferable. Dilute acid having a concentration of 0.1 normal to 5 normal is preferably used. If the concentration of the acid is too low, a cleaning capability is deteriorated. If the concentration of the acid is too high, the burden of the ultrapure water rinsing at a subsequent step is unnecessarily increased, which is inefficient. Acid having a concentration of 0.5 normal to 2 normal is used particularly preferably. While a higher liquid temperature is more effective, the corrosion of an apparatus is easily caused so that there is also a danger that contamination with the corrosion of the apparatus might stick to the filter cartridge. Moreover, a hydrogen halide gas is easily generated at a high temperature and environmental management is also hard to perform. Accordingly, it is preferable that the temperature of the liquid should range from 20°C to 40°C. An apparatus to directly come in contact with a dilute acid cleaning solution which is formed of a nonmetallic acid proof material is used. It is preferable to use a plastic material having a high chemical resistance and a high heat resistance, for example, a fluorine based polymer, a polysulfone based polymer, a polyolefin based polymer, a polyimide based polymer, polycarbonate or polyphenylene sulfide. In the case in which the filter cartridge is extremely contaminated, it is preferable that a dilute acid solution should be replaced with a fresh solution in the middle.

When the acid cleaning is completed for a predetermined time, the whole basket having the filter is pulled up from the liquid level and is left for several minutes and the liquid is then drained. Subsequently, the filter cartridge in the whole basket is immersed in an ultrapure water bath and a vibration is given thereto. The vibration to be given is the same as that of the previous step. It is preferable that the water temperature of the ultrapure water should be equal to that of the previous step. After the filter cartridge is immersed in the ultrapure water for 5 to 20 minutes, the whole basket having the filter is pulled up, the ultrapure water in the bath is replaced with fresh ultrapure water and the filter is immersed in the ultrapure water again. Such ultrapure water immersion is repeated twice to four times. Since there is no fear that the concentration of the acid might be reduced due to the rinsing to corrode the apparatus, it is preferable that the ultrapure water in which the filter is to be finally immersed should be set to have a high temperature of 40°C to 80°C.

Since the filter cartridge thus manufactured rarely has TOC elution, the indicated value of a TOC meter is rapidly decreased even if the ultrapure water is filtered. However, even if the cleaning is carried out completely in a manufacturing stage, a hydrocarbon component present in the air is slightly adsorbed in the filter when a package is unsealed to be mounted on a filter so that the filter cartridge comes in contact with the air. Accordingly, immediately after the ultrapure water is started to be filtered in a flow of approximately 8 liters per minute, a TOC component sticking to the surface of a filter or a filtering device is eluted. Consequently, a TOC value is always greater than the TOC value of the ultrapure water to be raw water. A difference between the TOC value of the outlet of an ultrapure water feeding device and a TOC value on the secondary side of the filter is referred to as ΔTOC. Immediately after the filtering is started, the ΔTOC has a value of several tens ppb to 200 ppb or more according to circumstances. In the filter cartridge manufactured by the method according to the invention, however, the TOC value is rapidly decreased and is reduced to 5 ppb or less after 10 minutes since the start of the flow.

### Example

While the invention will be described more specifically based on examples, the invention is not restricted to the following examples.

### Manufacturing Example 1 (filter cartridge according to the invention)

A polysulfone film having an ethanol bubble point of 250 kPa was formed by using UDEL POLYSULFONE P-3500 produced by AMOCO Co., Ltd. according to a method described in a first example of Japanese Laid-Open Patent Publication No. Sho 63-139930 (US4,840,733), and was set to be a micro-porous filtration membrane (which will be referred to as a film A). On the other hand, a polysulfone film having an ethanol bubble point of 50 kPa was formed by using the same UDEL POLYSULFONE P-3500 according to a method described in a third example of the Japanese Laid-Open Patent Publication No. Sho 63-139930 (which will be referred to as a film B) . A trench having a width of approximately 0.15 mm, a space between the trenches of 0.15 to 0.3 mm and a depth of approximately 55µm was formed on one of the surfaces of the film B by emboss calendaring (which will be referred to as a film C). The film C was used as supports and the film A was interposed between the two films C and was subjected to pleating by an ordinary method. The primary side film C and the secondary side film C which are not provided with the trench but are flat were set to come in contact with the film A. A space between the pleats was set to 10.5 mm and the width of the film was set to 240 mm, and a film bundle folded for approximately 120 piles was cut to be cylindrical and pleats on both ends were arranged and heat sealed. The film bundle and a core formed of polysulfone were accommodated in an outer cover formed of polysulfone by using the same pulysulfone resin and both ends were arranged to form a pleat body. The dimensions of the outer cover and the window of the core were set to 1.8 mm in an axial direction and 22 mm in a circumferential direction. The surface of end plates cut out of a round bar formed of polysulfone was irradiated by an infrared heater and was heated to approximately 300°C and was molten, and the end of the pleat body which is sufficiently preheated was pressed against the same surface and was bonding sealed. Similarly, the end plates was welding sealed on the opposite side of the pleat body so that a filter cartridge was finished. The filter cartridge thus finished is slowly vibrated vertically and cleaned for approximately 4 hours in approximately 1-normal hydrochloric acid. Next, the filter cartridge is immersed in ultrapure water for 1 hour with the vertical vibration, and then, is immersed in warm ultrapure water at 50 °C for approximately one hour with a vibration in the same manner. The filter cartridge was attached to a filter and ultrapure water regulated to 90°C to 100°C was caused to flow in an amount of 5 liters per minute for 60 minutes, and then, ultrapure water at approximately 25°C was caused to flow in an amount of 5 liters per minute for 10 minutes. The filter cartridge thus cleaned was dried in a clean oven at 70°C for 14 hours. Subsequently, the temperature was raised to 150°C and annealing was carried out for 2 hours.

### Manufacturing Example 2 (filter cartridge according to the invention)

A hole having a diameter of 0.6 mm was formed on a polyethersulfone film having a thickness of 50µm (SUMILITE FS-1300 (trade name) produced by Sumitomo Bakelite Company, Limited.) at a rate of three for an area of 2 cm X 2 cm. The perforated film was subjected to emboss calendaring by using a soft resin roll for a back roll such that the width of a trench is set to approximately 0.2 mm and a space between the trenches is set to approximately 0.2 mm. At this time, the surface temperature of an emboss roll was 125°C and a pressure was 100 kN/m. The perforated film subjected to the emboss calendaring was used as supports and a polyethersulfone micro-porous filtration membrane (Micro PES 1FPH (trade name) produced by Membrana Co., Ltd., an ethanol bubble point value of 340 kPa) having a nominal hole diameter of 0.1µm was interposed between two films to carry out pleating. A space between the pleats was 10.5 mm and the width of the film was 240 mm, and a film bundle folded for approximately 140 piles was cut to be cylindrical and pleats on both ends were arranged and heat sealed. On the other hand, an outer cover, a core and end plates which are formed of polyethersulfone by injection molding were previously subjected to annealing at 180°C for 5 hours and were preserved in a desiccator. The film bundle and the core were accommodated in the outer cover and both ends were arranged to form a pleat body. The surface of the end plates formed of polyethersulfone by the injection molding was irradiated by an infrared heater and was heated to approximately 350°C and was molten, and the end of the sufficiently preheated pleat body was pushed against the same surface and was thus bonding sealed. Similarly, the end plates was bonding sealed on the opposite side of the pleat body so that a filter cartridge was finished. The filter cartridge thus finished was subjected to cleaning, and subsequently, drying in the same manner as in the manufacturing example 1. Manufacturing Example 3 (filter cartridge for comparison)

In the manufacturing example 2, a filter cartridge was finished in the same manner as that in the manufacturing example 2 except that any of an outer cover, a core and end plates which are formed of polyethersulfone by the injection molding was not subjected to annealing in the manufacturing example 2.

### Example 1

The filter cartridges according to the manufacturing examples 1 to 3 were immersed in isopropanol at 65°C for 8 hours, and were then set to a filter and were cleaned with a water flow in an amount of 20 liters per minute. Next, a housing ball was removed with the filter cartridge attached to a housing base, and the filter cartridge was sunk into the water. An air pressure of 100 kPa in a reverse direction was applied to the filter cartridge and a state in which a bubble appears was observed.

As a result, in the filter cartridges according to the invention of the manufacturing examples 1 and 2, an air leakage was not observed except that the air was once dissolved in the water of a filtration membrane hole and an air flow was diffused to the opposite surface of a filtration membrane due to a difference between air absolute pressures on the surface and back of the filtration membrane. In the filter cartridge for comparison according to the manufacturing example 3, however, the air leakage was observed in the vicinity of the welding portion of a filtration membrane of end plates in addition to the diffused air flow. Moreover, the vicinity of the end plates welding portion of the filter cartridge for comparison according to the manufacturing example 3 was enlarged and observed by means of a magnifier. As a result, a large number of very small cracks were observed.

### Example 2

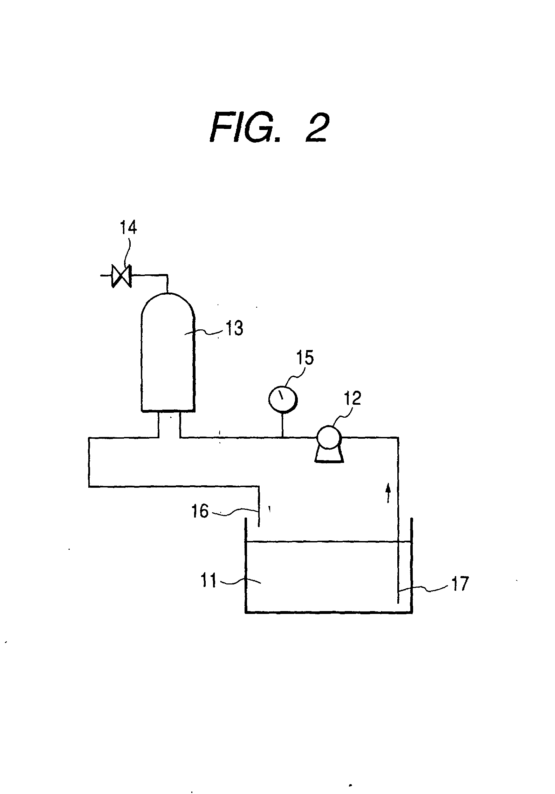

The filter cartridge manufactured in the manufacturing example 2 according to the invention was attached into a filter housing 13 of a cyclic filtration testing device shown in Fig. 2 and a mixed solution containing 28 ml of 50% hydrofluoric acid, 33g of ammonium fluoride and 189 ml of ultrapure water was sucked through a liquid inlet port 17 and was slowly fed to the filter housing 13 through a pump 12, and subsequently, a line provided with a pressure gauge 15, and air on the primary side of the filter housing 13 was discharged through an air vent port 14. After the air vent port 14 was closed, the mixed solution wasp fed in a flow of 0.5 m³ per hour to the filter housing 13 and was thus filtrated. The mixed solution could be smoothly filtrated with an initial filtration differential pressure of 35 kPa. When the filtration was continuously carried out for approximately 30 minutes, the mixed solution was returned from a liquid return port 16 to a feeding tank 11 and was dropped to generate a bubble at that time. The bubble was delivered to the filter housing 13 and was accumulated on the primary side of the filter cartridge so that a liquid level was lowered and the filtration differential pressure was raised to 100 kPa. However, when opening the air vent port 14 of the filter housing 13 to cause the accumulated air to flow away, the filtration differential pressure was recovered to 35 kPa in the initial stage.

### Industrial Applicability

A microfiltration filter cartridge according to the invention has an excellent filtration stability and does not generate a toxic gas in a burning and discarding process as a matter of course. Furthermore, even if the microfiltration filter cartridge is used for high temperature filtration of isopropanol in a semiconductor manufacturing process or the like, a crack is not generated on components, a completeness thereof can be suitably maintained and an excellent chemical resistance can be obtained.

## Claims

1. A microfiltration filter cartridge comprising a micro-porous filtration membrane, supports, a core, an outer cover and end plates, all the components being formed of a polysulfone based polymer, wherein melting molding members in the component is subjected to annealing.

2. The microfiltration filter cartridge according to claim 1, wherein the melting molding members subjected to the annealing is end plates.

3. The microfiltration filter cartridge according to claim 1 or 2, wherein all of the micro-porous filtration membrane, the supports, the core, the outer cover and the end plates which are the components are formed of polyethersulfone.

4. The microfiltration filter cartridge according to any of claims 1 to 3, wherein a dimension in an axial direction of a window of each of the outer cover and the core is 1 mm to 3 mm.

5. The microfiltration filter cartridge according to any of claims 1 to 4, wherein a primary side and/or secondary side supports/support are/is formed by a micro-porous film provided with a large number of very fine concave portions and/or convex portions.

6. The microfiltration filter cartridge according to any of claims 1 to 5, wherein the micro-porous filtration membrane has a water bubble point of 0.3 MPa or more and the supports has a water bubble point of 0.15 MPa or less.

7. A method of manufacturing a microfiltration filter cartridge comprising a micro-porous filtration membrane, supports, a core, an outer cover and end plates, all the components being formed of a polysulfone based polymer, wherein melting molding members in the component is subjected to annealing.

8. The method of manufacturing a microfiltration filter cartridge according to claim 7, wherein the melting molding members to be annealed is end plates.

9. The method of manufacturing a microfiltration filter cartridge according to claim 7 or 8, wherein all of the micro-porous filtration membrane, the supports, the core, the outer cover and the end plates which are the components are formed of polyethersulfone.

10. The method of manufacturing a microfiltration filter cartridge according to any of claims 7 to 9, wherein the cartridge is cleaned with a flow of warm ultrapure water at 50°C to 100°C after assembling and is then dried in a clean oven.

11. A method of filtrating a wafer cleaning solution for a semiconductor integrated circuit, wherein the microfiltration filter cartridge according to any of claims 1 to 6 is used to start to filtrate chemicals without prewetting through alcohol.
